**Europäisches Patentamt**

**European Patent Office**

**Office européen des brevets**

(19)

(11) Veröffentlichungsnummer : **0 334 922 B1**

(12) # EUROPÄISCHE PATENTSCHRIFT

(45) Veröffentlichungstag der Patentschrift :
**02.09.92 Patentblatt 92/36**

(51) Int. Cl.⁵ : **F26B 25/00, B01D 51/10**

(21) Anmeldenummer : **88908187.3**

(22) Anmeldetag : **07.09.88**

(86) Internationale Anmeldenummer :
**PCT/EP88/00807**

(87) Internationale Veröffentlichungsnummer :
**WO 89/03499 20.04.89 Gazette 89/09**

(54) **EINRICHTUNG ZUM ABSCHEIDEN VON KONDENSIERBAREN SCHADSTOFFEN.**

(30) Priorität : **10.10.87 DE 3734388**

(43) Veröffentlichungstag der Anmeldung :
**04.10.89 Patentblatt 89/40**

(45) Bekanntmachung des Hinweises auf die
Patenterteilung :
**02.09.92 Patentblatt 92/36**

(84) Benannte Vertragsstaaten :
**AT BE CH DE FR GB IT LI NL**

(56) Entgegenhaltungen :
**DE-A- 2 746 927**
**DE-A- 2 750 973**
**DE-A- 3 009 938**
**US-A- 4 012 847**
**US-A- 4 171 243**
**US-A- 4 715 965**

(73) Patentinhaber : **Behr GmbH & Co.**
**Mauserstrasse 3**
**W-7000 Stuttgart 30 (DE)**

(72) Erfinder : **CHRIST, Michael**
**Helmholtzweg 5**
**W-7000 Stuttgart 1 (DE)**
Erfinder : **TEICHMANN, Wolfgang**
**Hans-Holbein-Str. 3**
**W-7024 Filderstadt 4 (DE)**

(74) Vertreter : **Riedel, Peter, Dipl.-Ing.**
**Behr GmbH & Co. Mauserstrasse 3**
**W-7000 Stuttgart 30 (DE)**

## Beschreibung

Die vorliegende Erfindung bezieht sich auf eine Einrichtung zum Abscheiden von kondensierbaren Schadstoffen und festen Partikeln aus dem Prozeßgas bzw. der Abluft insbesondere einer Textilveredelungsanlage, wie beispielsweise einem Trockner, oder einer Beschichtungsanlage beispielsweise in der Papier- oder Kunststoffindustrie.

Aus der DE-A-2750 973 ist eine Einrichtung zum Abscheiden von kondensierbaren Schadstoffen und festen Partikeln aus dem Prozeßgas der Abluft einer Textilveredelungsanlage bekannt. Diese Einrichtung umfaßt eine erste Wärmetauscherstufe in Form eines Regenerators zur Abkühlung der Abluft auf eine Temperatur von ca. 80°, wodurch kondensierbare Schadstoffe und dispergierte feste Partikel ausgeschieden werden. In einer zweiten Wärmetauscherstufe wird die Abluft weiter abgekühlt zur Ausscheidung weiterer kondensierbarer Schadstoffe. Schließlich wird der Abluftstrom durch eine mechanische Filtereinrichtung geführt, in der die restlichen Verunreinigungen ausgeschieden werden.

Es ist die Aufgabe der vorliegenden Erfindung eine Einrichtung zum Abscheiden von kondensierbaren Schadstoffen und festen Partikeln der eingangs genannten Art zu schaffen, bei der bereits beim Vorfiltern eine erhebliche Abscheidung aus der Abluft möglich ist und eine Belastung des mechanischen Filters gering gehalten wird.

Diese Aufgabe wird bei einer Einrichtung zum Abscheiden von kondensierbaren Schadstoffen und festen Partikeln der eingangs genannten Art durch die im Anspruch 1 angegebenen Merkmale gelöst.

Durch die erfindungsgemäßen Maßnahmen wird nicht nur bereits beim Vorfiltern mit Hilfe einer Abkühlung der Abluft unter den Taupunkt der Aerosole eine Abscheidung von kondensierbaren Schadstoffen und festen Partikeln bzw. Aerosolen und damit ein Abzug des dadurch anfallenden Kondensats erreicht, sondern auch im mechanischen Filter die Abscheidung von Tropfen bewirkt, wodurch eine Belastung der Filtermatten gering gehalten wird. Der Aufwand zur Wartung und Reinigung des mechanischen Filters ist somit gering. Der Anteil des in den beiden Wärmetauscherstufen abgezogenen Kondensats kann bis zu 60% der abzuscheidenden Aerosole ausmachen. Dies bedeutet, daß die mechanische Endfiltervorrichtung wesentlich kompakter und kleinbauender ausgeführt werden kann, da sie nur noch einen Teil der bisher aus der Abluft auszuscheidenden Aerosolmenge aufzunehmen bzw. auszuscheiden hat. Dies heißt gleichzeitig, daß die Druckverluste im Abluftstrom geringer sind, und daß die Ventilatoren kleiner dimensioniert werden können. Dies alles führt zu Investitionseinsparungen.

In den beiden Wärmetauscherstufen werden die zur Kühlung dienenden Fluide erwärmt. Zur Verringerung des äußeren Energiebedarfs werden die warme Kühlluft, bzw. das warme Kühlwasser als Wärmerückgewinnungsträger oder als Abwärmeverwertungsträger verwendet. Hierzu dienen die Ausgestaltungen, die in den Merkmale der Ansprüche 4, 5 und 12 angegeben sind.

Eine bevorzugte kompakte konstruktive Ausgestaltung einer Einrichtung ergibt sich durch die Merkmale des Anspruchs 8, wobei zweckmäßigerweise für eine Vereinfachung beim Abziehen des Kondensats die Merkmale des Anspruchs 9 vorgesehen sind.

Die bevorzugte Anordnung von Gebläseeinrichtungen für die Abluft ist Gegenstand der Ansprüche 6 und 7. Um den Anteil der Beaufschlagung der Wärmetauscherstufen bzw. der Endfiltervorrichtung mit Abluft steuern zu können, dienen die Merkmale des Anspruchs 10. Für das vorübergehende Trennen der Wärmetauscherstufen oder der Endfiltervorrichtung vor der Abgasleitung, beispielsweise zum Zwecke der Reinigng, Reparatur oder dergleichen, ist die Ausgestaltung gemäß Anspruch 11 von Vorteil.

Weitere Einzelheiten der Erfindung sind der folgenden Beschreibung zu entnehmen, in der die Erfindung anhand der in der Zeichnung dargestellten Ausführungbeispiele näher beschrieben und erläutert ist.

Es zeigt:

Fig. 1 In schematischer blockartiger Darstellung eine Einrichtung zum Abscheiden von Aerosolen aus der 5 Abluft eines Trockners einer Textilveredelungsanlage;
und

Fig. 2 in perspektivischer Darstellung eine konstruktive Ausführung bzw. Variante der Einrichtung nach Fig. 1.

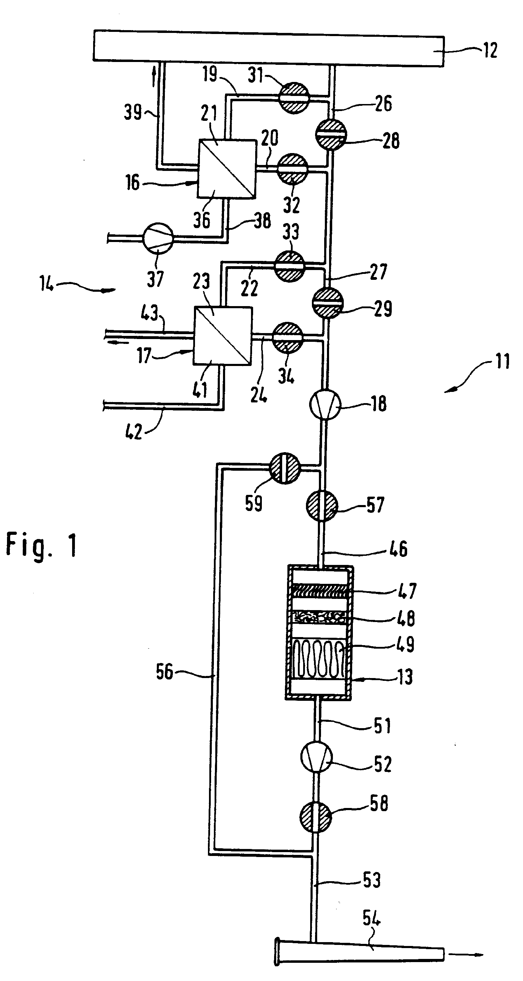

Die in Fig. 1 dargestellte Einrichtung 11 zum Abscheiden von kondensierbaren Schadstoffen und festen Partikeln bzw. deren Dispersionen. hier als Aerosole bezeichnet. aus der Abluft eines Trockners 12 einer Textilveredelungsanlage verwendet außer einem mechanischen Endfilter 13, nach welchem die Aerosole in sehr hohem Maße aus der Abluft abgeschieden worden sind, zum Vorfiltern bzw. Vorabscheiden von Aerosolen eine Wärmetauschervorrichtung 14, die beim Ausführungsbeispiel aus einer ersten Stufe in Form eines Luft/Luft-Wärmetauschers 16 und aus einer zweiten Stufe in Form eines Luft/Wasser-Wärmetauschers 17 zusammengesetzt ist.

Die Abluft bzw. jeweils ein Teil der verbrauchten Prozeßluft aus dem Trockner 12 wird mit Hilfe eines Gebläses 18, das zwischen der Wärmetauschervorrichtung 14 und dem mechanischen Endfilter 13 angeordnet ist, über eine Rohrleitung 19, 20 durch den Abluftteil 21 des Luft/Luft-Wärmetauschers 16 und über eine weitere Rohrleitung 22, 24 durch den Abluftteil 23 des Luft/Wasser-Wärmetauschers 17 ab- bzw. hindurchgesaugt.

Der jeweilige Abluftteil 21 bzw. 23 der Wärmetauscher 16, 17 ist von einer Kurzschlußleitung 26 bzw. 27 überbrückt, wobei sowohl in dieser als auch in den Rohrleitungen 19, 20, 22 und 24 jeweils Ventile bzw. Luftklappen 28, 29 und 31 bis 34 vorgesehen sind.

Dem Kühlteil 36 des Luft/Luft-Wärmetauschers 16 wird über ein Gebläse 37 Raumluft bzw. Frischluft über eine Rohrleitung 38 zugeführt, wobei die erwärmte Kühlluft ausgangsseitig des Wärmetauschers 16 über eine Rohrleitung 39 dem Trockner 12 zur Wärmerückgewinnung rückgeführt wird. Dabei kann diese erwärmte Kühlluft entweder unmittelbar als Prozeßgas bzw. -luft im Trockner 12 oder zum Erwärmen des Prozeßgases bzw. des zu erneuernden Teils des Prozeßgases im Trockner 12 über einen Wärmetauscher eingesetzt werden.

Dem Kühlteil 41 des Luft/Wasser-Wärmetauschers 17 wird Frischwasser über eine Rohrleitung 42 zugeführt, wobei das erwärmte Kühlwasser über eine Rohrleitung 43 abgeführt wird und zur Abwärmeverwendung einem Fremdsystem, wie beispielsweise einer Warmwasser-Heizungsanlage, einem Brauchwassersystem oder dgl. unmittelbar oder über einen Wärmetauscher zugeführt wird. Es versteht sich, daß der Wärmetauscher 17 auch als Luft/Luft-Wärmetauscher ausgebildet sein kann.

Mit dieser Wärmetauschervorrichtung 14 als Vorfilterung bzw. Vorabscheiden wird folgendes bewirkt:

Die Abluft aus dem Trockner 12 in der Rohrleitung 19 hat eine Temperatur von etwa 170°C, wobei Schadstoffe in Form von Aerosolen in der Größenordnung von beispielsweise etwa 173 mg/Nm$^3$ enthalten sind. In dem Luft/Luft-Wärmetauscher 16 wird die Abluft auf etwa 100°C (unter den Taupunkt bestimmter Aerosole) abgekühlt, wodurch aufgrund der dadurch entstehenden Kondensation und Bindung der Schadstoffe an das entstehende Kondensat ein erheblicher Teil der Schadstoffe durch einen hier nicht dargestellten Kondensatabzug abgeschieden werden kann. Wird zum Kühlen beispielsweise Frischluft in Form von Raumluft mit einer Temperatur von 28°C zugeführt, ergibt sich eine Erhöhung der Temperatur der Kühlluft nach der Wärmetauscherstufe 16 in der Rohrleitung 39 auf 127°C.

Die bereits bis zu einem gewissen Grad von Aerosolen befreite Abluft wird daraufhin dem Luft/Wasser-Wärmetauscher 17 zugeführt, an dessen Ausgang die Abluft in der Rohrleitung 24 eine Temperatur von 65°C aufweist. Auch in dieser Wärmetauscherstufe 17 erfolgt durch die Abkühlung der Abluft auf unterhalb des Taupunkts weiterer Aerosole eine Kondensation, so daß mit dem Kondensat ein weiterer erheblicher Teil an Schadstoffen bzw. Aerosolen in nicht dargestellter Weise abgezogen werden kann. Am Ende dieser Wärmetauschervorrichtung 14 ist in der Abluft ein um 60 % verminderter Anteil an Schadstoffen bzw. Aerosolen, also nur noch in der Größenordnung von beispielsweise etwa 56 mg/Nm$^3$ enthalten. Wird dem Luft/Wasser-Wärmetauscher 17 Kühlwasser mit einer Temperatur beispielsweise 12°C zugeführt, so wird bei den genannten Bedingungen das Kühlwasser auf eine Temperatur von beispielsweise etwa 55°C erwärmt und durch die Rohrleitung 43 abgeführt.

Von den restlichen 40 % an Schadstoffen bzw. Aerosolen in der Abluft wird ein großer Teil in dem mechanischen Endfilter 13 abgeschieden, dem die Abluft über eine Rohrleitung 46 zugeführt wird. Das mechanische Endfilter 13 besitzt eine dreistufige Filterung bzw. Abscheidung, für die in der ersten Stufe Profilbleche 47, in der zweiten Stufe Metallfasern 48 und in der dritten Stufe Filtermatten 49 vorgesehen sind. Ausgangsseitig wird die noch beispielsweise etwa 50°C warme Abluft aus dem Filter 13 über eine Rohrleitung 51 und ein weiteres Gebläse 52 zum Ausgleich des Druckabfalls in Endfilter 13 abgesaugt und über eine Rohrleitung 53 und einen Kamin 54 ausgeblasen. Auch das mechanische Endfilter 13 ist von einer Kurzschlußleitung 56 überbrückt, wobei in den Rohrleitungen 51 und 53 und der Kurzschlußleitung 56 Ventile bzw. Luftklappen 57, 58 bzw. 59 vorgesehen sind.

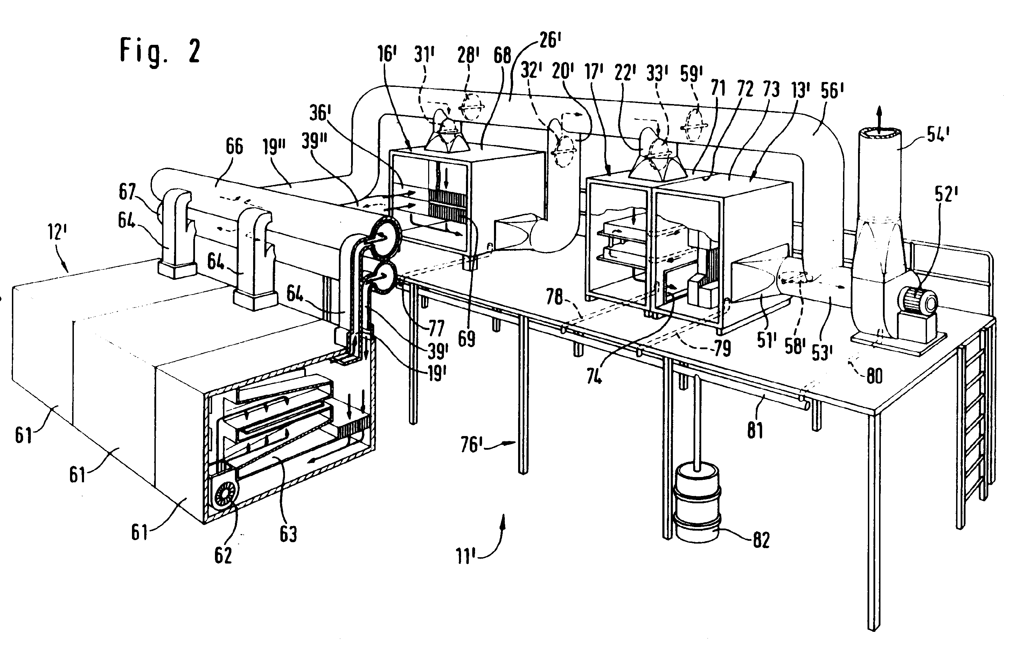

Fig. 2 zeigt in einer Variante eine konstruktiv ausgeführte Einrichtung 11′ entsprechend der schematisch dargestellten Einrichtung 11 in Fig. 1. Der Trockner 12′, der mehrere Abteilungen 61 umfaßt, wird über ein Gebläse 62 mit umgewälzter und teilweise erneuerter Prozeßluft versorgt, die in einem Wärmetauscher 63 mit der über die Rohrleitungen 39′ zugeführten, erwärmten Kühlluft, aufgeheizt wird. Jede der Abteilungen 61 des Trockners 12′ ist mit einem Zwillingsrohr 64 versehen, das die Abluftrohrleitung 19′ und die Rohrleitung 39′ für die erwärmte Kühlluft aufnimmt. Die Rohrleitungen 19′ und 39′ der Zwillingsrohre 64 münden in jeweils eine Sammelrohrleitung 66, 67, die parallel zueinander und übereinander angeordnet sind und von denen die Sammelrohrleitung 66 für die Abluft mit der Rohrleitung 19″ zum Luft/Luft-Wärmetauscher 16′ und die Sammelrohrleitung 67 mit der Rohrleitung 39″ vom Kühlteil 36′ des Luft/Luft-Wärmetauschers 16′ verbunden ist.

Der Luft/Luft-Wärmetauscher 16′ besitzt ein isoliertes Gehäuse 68, in welchem Kreuzstrom-Platten-Wärmetauscherelemente 69 leicht ausbaubar untergebracht sind. Vor den Wärmetauscherelementen 69 sind Türen gut zugänglich Flusensiebe angeordnet. An einer Seite des Gehäuses 68 ist in nicht dargestellter Weise des Gebläse zur Zuführung der Frischluft vorgesehen. Eingangsseitig am Wärmetauscher 16′ ist die Rohrleitung 19″ mit einer Luftklappe 31′ und die Ausgangsrohrleitung 20′ mit einer Luftklappe 32′ versehen. Auch hier sind die beiden Rohrleitungen 19' und 20' durch eine mit einer Luftklappe 28' versehene Kurzschlußleitung 26' verbunden.

Über die mit einer Luftklappe 33' versehene Rohrleitung 22' ist der Luft/Wasser-Wärmetauscher 17' angeschlossen. Der Aufbau dieses Wärmetauschers 17' entspricht im wesentlichen dem der ersten Wärmetauscherstufe 16'. Durch die höhere Leistung des Luft/Wasser-Wärmetauschers 17' ist eine größere Kondensation möglich. Unmittelbar an eine Seitenwand 72 des Gehäuses 71 der zweiten Wärmetauscherstufe 17' grenzt das Gehäuse 73 des mechanischen Endfilters 13' an, wobei ein Durchgang 74 für die Abluft vorgesehen ist. Der Aufbau des mechanischen Endfilters 13' kann dem des Endfilters 13 der Fig. 1 entsprechen oder zweigeteilt in Form eines mit Filtermatten ausgestatteten Teils und in Form eines Tropfenabscheiderteils vorgesehen sein.

Die mit einer Luftklappe 58' versehene Ausgangsleitung 51' ist einerseits über eine Kurzschlußleitung 56', die eine Luftklappe 59' enthält, mit der Zugangsrohrleitung 22' des Wärmetauschers 17' verbunden und führt andererseits über die Rohrleitung 53' und ein Gebläse 52' zu einem Kamin 54'.

Beim dargestellten Ausführungsbeispiel stehen die Wärmetauschervorrichtung 14' bzw. die beiden Wärmetauscher 16', 17' und das Endfilter 13' erhöht auf einem Gestell 76, unter dem Abzugsrohrleitungen 77, 78, 79, 80 von den Wärmetauschern 16', 17', dem Endfilter 13' und dem Kamin 54' bodenseitig zu einer Sammelabzugsleitung 81 geführt sind, die mit einem Kondensatauffangbehälter 82 verbunden ist.

Das Verfahren zum Abscheiden von Schadstoffen bzw. Aerosolen ist bei der Einrichtung 11' nach Fig. 2 prinzipiell derselbe wie bei der Einrichtung 11 nach Fig. 1, wobei jedoch die beispielsweise 170°C warme Abluft zwar in der ersten Stufe ebenfalls auf 100°C abkühlt, in der zweiten Wärmetauscherstufe 17' jedoch auf etwa 40°C heruntergekühlt werden kann. Auch dadurch ist die Abluft vor dem mechanischen Endfilter 13' soweit abgekühlt, daß die meisten Schadstoffe als feinste Tropfen vorliegen und mechanisch abgeschieden werden können.

Die vorliegende Erfindung kann nicht nur bei Textilveredelungsanlagen eingesetzt werden, sondern auch bei Beschichtungsanlagen beispielsweise in der Papier- und Kunststoffindustrie.


## Patentansprüche

1.  Einrichtung zum Abscheiden von kondensierbaren Schadstoffen und festen Partikeln aus dem Prozeßgas bzw. der Abluft, insbesondere eines Trockners einer Textilveredelungsanlage oder einer Beschichtungsanlage der Papier- oder Kunststoffindustrie, mit einer ersten Wärmetauscherstufe (16, 16'), die einerseits vom Abluftstrom und andererseits von einem Kühlluftstrom beaufschlagt und mit einem Kondensatabzug (77) versehen ist, und mit einer zweiten Wärmetauscherstufe (17, 17'), die im Abluftstrom der ersten Wärmetauscherstufe (16, 16') nachgeordnet und von einem zweiten Kühlfluid beaufschlagt ist und ebenfalls einen Kondensatabzug (78) aufweist, wobei die zweite Wärmetauscherstufe (17, 17') als Abluft/Wasser-Wärmetauscher oder Abluft/Luft-Wärmetauscher ausgebildet ist und in Abluftströmungsrichtung die zweite Wärmetauscherstufe (17, 17') ausgangsseitig mit einer mechanischen Endfiltervorrichtung (13, 13') verbunden ist, wobei die mechanische Endfiltervorrichtung (13, 13') zwei Filterteile (47, 48, 49) umfaßt, von denen eins in Form eines Tropfenabscheiderteils (47) und ein anderes in Form von Filtermatten (49) ausgebildet ist.

2.  Einrichtung nach Anspruch 1, **dadurch gekennzeichnet**, daß die Endfiltervorrichtung drei Filterteile umfaßt, wobei dem Tropfenabscheider eine Filterstufe (48) aus Metallfasern nachgeordnet ist.

3.  Einrichtung nach Anspruch 1 oder 2, **dadurch gekennzeichnet**, daß der Tropfenabscheider (47) aus Profilblechen besteht.

4.  Einrichtung nach Anspruch 1, **dadurch gekennzeichnet**, daß der Kühlluftausgang (39, 39') der ersten Wärmetauscherstufe (16, 16') mit einem Prozeßlufteingang der Textilveredelungsanlage (12), der Beschichtungsanlage oder dergleichen verbunden ist.

5.  Einrichtung nach Anspruch 1, **dadurch gekennzeichnet**, daß der Kühlluftausgang (39, 39') der ersten Wärmetauscherstufe (16, 16') mit einem von der Prozeßluft durchströmten Wärmetauscher (63) der Textilveredelungsanlage (12), der Beschichtungsanlage oder dergleichen verbunden ist.

6.  Einrichtung nach einem der Ansprüche 1 bis 5, **dadurch gekennzeichnet**, daß in der Abluftleitung (51, 53, 54; 53', 54') ein der Endfiltervorrichtung (13; 13') nachgeschaltetes Gebläse (52; 52') vorgesehen ist.

7. Einrichtung nach einem der Ansprüche 1 bis 6, **dadurch gekennzeichnet,** daß in der Abluftleitung nach der Wärmetauscherstufe (16) bzw. den Wärmetauscherstufen (16 und 17) und vor der Endfiltervorrichtung (13) ein Gebläse (18) angeordnet ist.

8. Einrichtung nach einem der Ansprüche 1 bis 6, **dadurch gekennzeichnet,** daß die beiden Wärmetauscherstufen (16, 17; 16′, 17′) in einem Abstand voneinander angeordnet und durch eine Rohrleitung miteinander verbunden sind und daß an eine zweite Wärmetauscherstufe (17′) angrenzend die mit einem Kondensatabzug (79) versehene mechanische Endfiltervorrichtung (13′) angeordnet ist.

9. Einrichtung nach einem der Ansprüche 1 bis 8, **dadurch gekennzeichnet,** daß die einzelnen Kondensatabzüge (77 bis 80) miteinander verbunden und einem gemeinsamen Kondensatsammler (82) zugeführt sind.

10. Einrichtung nach einem der Ansprüche 1 bis 8, **dadurch gekennzeichnet,** daß derjeweilige Abluftteil (21, 23) der Wärmetauscherstufen (16, 17; 16′, 17′) und/oder die Endfiltervorrichtung (13; 13′) mit einer Kurzschlußleitung (26, 27, 56; 26′, 56′) versehen ist, in der Ventile bzw. Luftklappen (28, 29, 59; 28′ 59′) angeordnet sind.

11. Einrichtung nach Anspruch 1, **dadurch gekennzeichnet,** daß in der Abluftleitung (19, 20, 22, 24, 46, 54) der Wärmetauscherstufen (16, 17) und der Endfiltervorrichtung (13) Ventile bzw. Luftklappen (31 bis 34, 57, 58) vorgesehen sind.

12. Einrichtung nach einem der Ansprüche 1 bis 8, **dadurch gekennzeichnet,** daß der Kühlwasser- bzw. Kühlluftausgang (43) der zweiten Wärmetauscherstufe (17, 17′) einem weiteren Wärmetauschersystem zugeführt ist.

## Revendications

1. Dispositif d'extraction de substances nocives condensables et de particules solides du gaz de traitement ou de l'air d'évacuation en particulier d'un séchoir d'une installation d'ennoblissement de textiles ou d'une installation d'enduction de l'industrie du papier ou dés matières plastiques, comprenant un premier étage échangeur de chaleur (16, 16′) qui est balayé d'une part par le flux d'air d'évacuation et d'autre part par un flux d'air de refroidissement et qui est équipé d'un soutirage de condensat (77), le dispositif comprenant également un second étage échangeur de chaleur (17, 17′) qui est monté en aval dans le flux d'air d'évacuation du premier étage échangeur de chaleur (16, 16′) et qui est balayé par un second fluide de refoidissement et comporte également un soutirage de condensat (78), le second étage échangeur de chaleur (17, 17′) étant constitué d'un échangeur de chaleur air d'évacuation/eau ou d'un échangeur de chaleur air d'évacuation/air et la sortie du second étage échangeur de chaleur (17, 17′), dans le sens de la circulation de l'air d'évacuation, communiquant avec un dispositif mécanique de filtration finale (13, 13′), le dispositif mécanique de filtration finale (13, 13′) comprenant deux sections de filtration (47, 48, 49) dont l'une est constituée d'une section d'extraction de gouttelettes (47) et l'autre, de feutres de filtration (49).

2. Dispositif selon la revendication 1, caractérisé en ce que le dispositif de filtration finale comprend trois sections, un étage de filtration (48) constitué de fibres métalliques étant monté en aval de l'extracteur de gouttelettes.

3. Dispositif selon la revendication 1 ou 2, caractérisé en ce que l'extracteur de gouttelettes (47) consiste en des tôles profilées.

4. Dispositif selon la revendication 1, caractérisé en ce que la sortie d'air de refroidissement (39, 39′) du premier étage échangeur de chaleur (16, 16′) communique avec une entrée d'air de traitement de l'installation d'ennoblissement de textiles (12), de l'installation d'enduction ou analogue.

5. Dispositif selon la revendication 1, caractérisé en ce que la sortie d'air de refroidissement (39, 39′) du premier étage échangeur de chaleur (16, 16′) communique avec un échangeur de chaleur (63) balayé par l'air de traitement et faisant partie de l'installation d'ennoblissement de textiles (12), de l'installation d'enduction ou analogue.

6. Dispositif selon l'une des revendications 1 à 5, caractérisé en ce qu'une soufflante (52 ; 52′) montée en aval du dispositif de filtration finale (13 ; 13′) est prévue dans le conduit d'air d'évacuation (51, 53, 54 ; 53′, 54′).

7. Dispositif selon l'une des revendications 1 à 6, caractérisé en ce qu'une soufflante (18) est disposée dans le conduit d'air d'évacuation en aval de l'étage échangeur de chaleur (16) ou des étages échangeurs de chaleur (16 et 17) et en amont du dispositif de filtration finale (13).

8. Dispositif selon l'une des revendications 1 à 6, caractérisé en ce que les deux étages échangeurs de chaleur (16, 17 ; 16′, 17′) sont placés à distance l'un de l'autre et communiquent par un conduit et en ce que le dispositif mécanique de filtration finale (13′), qui est équipé d'un soutirage de condensat (79), est disposé de manière à être contigu à un second étage échangeur de chaleur (17′).

9. Dispositif selon l'une des revendications 1 à 8, caractérisé en ce que les différents soutirages de condensat (77 à 80) sont reliés les uns aux autres et dirigés sur un collecteur commun de condensat (82).

10. Dispositif selon l'une des revendications 1 à 8, caractérisé en ce que chaque section d'air d'évacuation (21, 23) des étages échangeurs de chaleur (16, 17 ; 16′, 17′) et/ou le dispositif de filtration finale (13, 13′) est équipé d'un conduit de dérivation (26, 27, 56 ; 26′, 56′) dans lequel des soupapes ou clapets à air (28, 29, 59 ; 28′, 59′) sont disposés.

11. Dispositif selon la revendication 1, caractérisé en ce que des soupapes ou des clapets à air (31 à 34, 57, 58) sont prévus dans les conduits d'air d'évacuation (19, 20, 22, 24, 46, 54) des étages échangeurs de chaleur (16, 17) et du dispositif de filtration finale (13).

12. Dispositif selon l'une des revendications 1 à 8, caractérisé en ce que la sortie d'eau de refroidissement ou d'air de refroidissement (43) du second étage échangeur de chaleur (17, 17′) est dirigée sur un autre système d'échange de chaleur.

## Claims

1. An arrangement for separating condensable harmful substances and solid particles from the process gas or used air, particularly from a drier of a textile finishing plant or coating plant in the paper or synthetic plastics industry, with a first heat exchanger stage (16, 16′) to one side of which the flow of used air is applied while to the other a stream of cooling air is applied, and with a condensate extractor (77) and with a second heat exchanger stage (17, 17′) which is downstream of the first heat exchanger stage (16, 16′) in the stream of used air and to which a second cooling fluid is applied and which likewise has a condensate extractor (78), the second heat exchanger stage (17, 17′) being constructed as a used air/water heat exchanger or used air/air heat exchanger, the second heat exchanger stage (17, 17′) in the directional flow of used air having its outlet connected to a mechanical final filtering device (13, 13′), the mechanical final filtering device (13, 13′) comprising two filter parts (47, 48, 49) of which one is constructed in the form of a drip separator part (47) while another is constructed in the form of filter mats (49).

2. An arrangement according to Claim 1, characterised in that the final filtering device comprises three filter parts, a filter stage (48) of metal fibres being disposed downstream of the drip separator.

3. An arrangement according to Claim 1 or 2, characterised in that the drip separator (47) consists of profiled plates.

4. An arrangement according to Claim 1, characterised in that the cooling air outlet (39, 39′) from the first heat exchanger stage (16, 16′) is connected to a process air inlet to the textile finishing plant (12), the coating plant or the like.

5. An arrangement according to Claim 1, characterised in that the cooling air outlet (39, 39′) of the first heat exchanger stage (16, 16′) is connected to a heat exchanger (63) through which process air flows and which is part of the textile finishing plant (12), or to the coating plant or the like.

6. An arrangement according to one of Claims 1 to 5, characterised in that a blower (52, 52′) is provided in

EP 0 334 922 B1

the used air line (51, 53, 54; 53′, 54′) downstream of the final filtering device (13, 13′).

7. An arrangement according to one of Claims 1 to 6, characterised in that a blower (18) is provided in the used air line downstream of the heat exchanger stage (16) or heat exchanger stages (16 and 17) and upstream of the final filtering device (13).

8. An arrangement according to one of Claims 1 to 6, characterised in that the two heat exchanger stages (16, 17; 16′, 17′) are disposed at a distance from each other and are connected to each other by a pipeline and in that adjacent the second heat exchanger stage (17′) is the mechanical final filtering device (13′) which is provided with a condensate extractor (79).

9. An arrangement according to one of Claims 1 to 8, characterised in that the individual condensate extractors (77 to 80) are connected to one another and lead to a common condensate collector (82).

10. An arrangement according to one of Claims 1 to 8, characterised in that the relevant used air part (21, 23) of the heat exchanger stages (16, 17; 16′, 17′) and/or the final filtering device (13, 13′) is provided with a short circuit line (26, 27, 56; 26′, 56′) in which there are valves or ventilation flaps (28, 29, 59; 28′, 59′).

11. An arrangement according to Claim 1, characterised in that valves or ventilation flaps (31 to 34, 57, 58) are provided in the used air line (19, 20, 22, 24, 46, 54) from the heat exchanger stages (16, 17) and the final filtering device (13).

12. An arrangement according to one of Claims 1 to 8, characterised in that the cooling water or cooling air outlet (43) from the second heat exchanger stage (17, 17′) passes to a further heat exchanger system.

7

Fig. 1

Fig. 2